# EUROPÄISCHE PATENTSCHRIFT

(11) **EP 3 001 271 B1**
(45) Veröffentlichungstag und Bekanntmachung des Hinweises auf die Patenterteilung: **18.03.2020**
(21) Anmeldenummer: 14186212.8
(22) Anmeldetag: 24.09.2014
(51) Int. Cl.: G05B 23/02, G05B 9/03, G05B 19/402, H02P 6/18

(54) **Verfahren und Vorrichtung zur Überwachung einer Bewegungsgröße eines Antriebs**
Method and device for monitoring a movement of a drive
Procédé et dispositif destinés à la quantité de mouvement d'un entraînement

(43) Veröffentlichungstag der Anmeldung: 30.03.2016
(73) Patentinhaber: Siemens Aktiengesellschaft, 80333 München (DE)
(72) Erfinder: Rattaro, Luca Silvio, 91052 Erlangen (DE); Schell, Siegfried, 90556 Cadolzburg (DE)

(56) Entgegenhaltungen:
- EP-A1- 2 304 508
- EP-A2- 1 501 185
- US-A1- 2012 013 285
- ZHIQIAN CHEN ET AL: "New adaptive sliding observer for sensorless control of surface permanent magnet synchronous motor", POWER ELECTRONICS AND MOTION CONTROL CONFERENCE, 2000. PROCEEDINGS. PI EMC 2000. THE THIRD INTERNATIONAL AUGUST 15-18, 2000, PISCATAWAY, NJ, USA,IEEE, Bd. 1, 15. August 2000 (2000-08-15), Seiten 180-185, XP010522839, ISBN: 978-7-80003-464-0

## Beschreibung

Verfahren und Vorrichtung zur Überwachung einer Bewegungsgröße eines Antriebs.

Die Erfindung betrifft ein Verfahren und eine Vorrichtung zur fehlersicheren Überwachung einer Bewegungsgröße eines elektrischen Antriebs anhand erfasster Phasenstromistwerte. Unter einer Bewegungsgröße wird hierbei insbesondere die Position (Lage) oder die Geschwindigkeit (Drehzahl) des üblicherweise gegenüber einem feststehenden Teil (Stator) rotatorisch bewegten Teils (Rotor) einer elektrischen Maschine (Elektromotor oder Generator) verstanden.

Die fehlersichere Überwachung einer solchen Bewegungsgröße eines elektrischen Antriebs ist beispielsweise, insbesondere im Falle einer elektromotorisch angetriebenen Werkzeugmaschine oder dergleichen sicherheitsrelevanten Teilen, in sicherheitsrelevanter Hinsicht von Bedeutung, um regelmäßig die Position (Lage) und/oder die Geschwindigkeit des mittels des Antriebs bewegten Teils möglichst exakt zu bestimmen. Für eine solche fehlersichere Überwachung wird die Bewegungsgröße typischerweise zumindest zweifach überwacht, wobei die Überwachungsergebnisse miteinander verglichen und auf Übereistimmung (Plausibilität) überprüft werden.

Eine häufig angewendete Überwachungsmethode setzt für eine redundante Überwachung der Bewegungsgröße einen mit dem bewegten Teil des Antriebs gekoppelten (Lage-)Geber einerseits sowie eine aus den Phasenströmen des Antriebs abgeleitete Lage- oder Geschwindigkeitsgröße andererseits ein, um die derart ermittelten Größen auf Plausibilität hin zu überprüfen. Während bei einer Übereinstimmung von der Korrektheit der Bewegungsgröße ausgegangen wird, führt eine Abweichung zu einer Fehlermeldung. Eine solche redundante Sicherheitseinrichtung ist beispielsweise aus der DE 100 35 783 A1 bekannt.

Aus der DE 101 63 010 A1 sind eine Vorrichtung und ein Verfahren zur fehlersicheren Überwachung der Geschwindigkeit eines elektrischen Antriebs bekannt. Dabei werden zwei Prozessoren für einen Kreuzvergleich der Überwachungsergebnisse eingesetzt, welche die Überwachung auf unterschiedliche Weise durchführen. Ein erster Prozessor arbeitet den regulären Regelalgorithmus der Drehzahlregelung ab und führt anhand eines geschätzten oder gemessenen Drehzahlwertes die Überwachung durch. Der zweite Prozessor bestimmt aus gemessenen Stromwerten oder aus einer Rekonstruktion der Steuerspannung eine aktuelle Ausgangsfrequenz des die Antriebs- oder Phasenströme liefernden Leistungsteils in Form eines Frequenzumrichters.

Eine ähnliche Vorrichtung, die ebenfalls auf einen separaten Drehzahlsensor verzichtet, ist aus der DE 10 2005 045 284 A1 bekannt.

Zur redundanten Überwachung des maximalen Drehmoments eines elektrischen Antriebs ist es aus der DE 42 34 501 A1 bekannt, in einem ersten Kanal das momentane Drehmoment anhand der Antriebs- bzw. Phasenströme zu bestimmen, während in einem zweiten Kanal das Drehmoment anhand einer momentanen Drehzahl und eines Kennlinienfeldes des elektrischen Antriebs geschätzt wird. Allerdings wird auch hier die Drehzahl wiederum mithilfe eines Drehzahlsensors bestimmt.

Aus der DE 10 2006 021 354 A1 ist es grundsätzlich bekannt, eine elektrische Maschine, insbesondere einen Synchronmotor, mit redundanten Statorwicklungen (Wicklungssystemen) auszubilden und diese dreiphasigen Wicklungssysteme mit einer der Anzahl der Statorwicklungen entsprechenden Anzahl von Leistungsteilen in Form von Umrichtern zur elektrischen Versorgung zu bestromen.

Eine fehlersichere Ermittlung der Position und/oder der Geschwindigkeit eines solchen, durch zwei oder mehr Leistungsteile gesteuert bestromten Antriebs (Motor, Generator) erfordert bislang den Einsatz eines fehlersicheren Messsystems in Form eines Positions- oder Drehzahlgebers oder entsprechender Vorrichtungen, die nicht im Antriebssystem integriert sind.

Aus US 2012/013285 ist es bekannt, eine Vorrichtung und ein Verfahren zur Überwachung einer elektrischen Größe eines elektrischen Antriebs anhand erfasster Phasenstromistwerte, wobei an jedes von mehreren zur gesteuerten Bestromung des Antriebs parallel geschalteten Motormodulen ein Sollwert übertragen und entsprechende Phasenströme eingestellt werden, wobei jedes Motormodul aus den gemessenen Phasenstromistwerten einen Richtungswinkelistwert ermittelt und diesen mit dem Sollwert vergleicht und hinsichtlich deren Übereinstimmung überprüft, wobei jedes Motormodul die gemessenen Phasenstromistwerte an eine übergeordnete Steuereinrichtung überträgt, wobei die von der Steuereinrichtung modulspezifisch ermittelten Richtungswinkelistwerte an das jeweilige Motormodul übermittelt werden.

Aus EP 2 304 508 A1 ist es bekannt, eine Einrichtung zur besseren Messung der Position einer elektrischen Maschine aus dem dem Motor zugeführten Strom, wobei zum sicheren Betrieb die Messung der Position des Antriebs auf zwei voneinander unabhängigen Wegen oder Kanälen erfolgt und danach die beiden Messwerte (Geberauswertung, Stromauswertung) kombiniert und auf sichere Arbeitsweise sowie Einhaltung einer sicheren Geschwindigkeit des Antriebs überprüft werden.

Der Erfindung liegt die Aufgabe zugrunde, eine Bewegungsgröße (Position oder Geschwindigkeit) eines elektrischen Antriebs (elektrische Maschine), der mit mehreren parallel geschalteten Motormodulen (Leistungsteilen) betrieben wird, fehlersicher und vorzugsweise auch geberlos - also ohne die Notwendigkeit eines Positions- oder Drehzahlgebers - zu bestimmen.

Insbesondere sollen ein Verfahren und eine Vorrichtung zur fehlersicheren Überwachung einer Bewegungsgröße eines elektrischen Antriebs mit mehreren parallel geschalteten Leistungsteilen bzw. diese enthaltenden Motormodulen angegeben werden.

Bezüglich des Verfahrens wird diese Aufgabe mit den Merkmalen des Anspruchs 1 und hinsichtlich der Einrichtung mit den Merkmalen des Anspruchs 6 erfindungsgemäß gelöst. Vorteilhafte Ausgestaltungen und Weiterbildungen sind Gegenstand der hierauf rückbezogenen Unteransprüche.

Hinsichtlich des Verfahrens zur fehlersicheren Überwachung einer Bewegungsgröße eines elektrischen Antriebs anhand erfasster Phasenstromistwerte werden an jedes von mehreren zur gesteuerten Bestromung des Antriebs parallel geschalteten Motormodule ein Sollwert übertragen und entsprechende Phasenströme (geregelt) eingestellt. Vorzugsweise handelt es sich hierbei für jedes Motormodul um denselben Sollwert, der geeigneterweise den gleichen Richtungswinkel (Stromvektorwinkel) repräsentiert und zweckmäßigerweise aus einem von einem Regler (Drehzahl- bzw. Geschwindigkeits- und Stromregler) errechneten Spannungssollwert abgeleitet ist.

Jedes Motormodul ermittelt aus den gemessenen Phasenstromistwerten einen Richtungswinkelistwert und vergleicht diesen mit dem geeigneterweise ebenfalls als Richtungswinkel umgesetzten Sollwert hinsichtlich deren Übereinstimmung.

Jedes Motormodul überträgt die gemessenen Phasenstromistwerte zudem an eine übergeordnete Regel- und/oder Steuereinrichtung, die aus den Phasenstromistwerten analog zu jedem Motormodul den modulspezifischen Richtungswinkelistwert ermittelt und diesen ebenfalls hinsichtlich Übereinstimmung (Plausibilität) mit dem Sollwert vergleicht. Die von der Steuereinrichtung errechneten Richtungswinkelistwerte werden an die parallel geschalteten Motormodule übertragen, wobei jedes Motormodul nicht nur den jeweils modulspezifischen Richtungswinkelistwert, sondern auch diejenigen Richtungswinkelistwerte der jeweils anderen Motormodule auf deren Übereinstimmung mit dem Sollwert prüft, so dass eine vollständig redundante, nämlich in der Steuereinrichtung und in den Motormodulen und damit fehlersichere Prüfung aller Richtungswinkelistwerte mit dem Sollwert auf Übereinstimmung (Plausibilität) erzielt wird.

Dabei werden vorzugsweise die von der Steuereinrichtung modulspezifisch ermittelten Richtungswinkelistwerte an jedes Motormodul übermittelt. Der Richtungswinkelistwert wird hierbei in jedem Motormodul und in der Steuereinrichtung vorzugsweise aus mindestens zwei gemessenen Phasenstromistwerten ermittelt.

Die von der Steuereinrichtung modulspezifisch ermittelten Richtungswinkelistwerte werden an das jeweilige Motormodul übermittelt, welches den oder jeden modulspezifisch ermittelten Richtungswinkelistwert und den von der Steuereinrichtung ermittelten Richtungswinkelistwert mit dem Sollwert vergleicht und ebenfalls plausibilisiert. Im Falle einer Übereinstimmung wird dieser plausibilisierte Wert zur Bestimmung der fehlersicheren Bewegungsgröße herangezogen.

Geeigneterweise generiert jedes Motormodul für jede Phase eines dreiphasigen Antriebs einen Phasenstromistwert. Diese werden vorzugsweise an die Steuereinrichtung über diese und den Motormodul zugeordnete Kommunikationsschnittstellen übertragen. Über diese wird auch der allen Motormodulen gemeinsame Sollwert übertragen.

Die Vorrichtung zur fehlersicheren Überwachung einer Bewegungsgröße eines geregelt betriebenen elektrischen Antriebs arbeitet geeigneterweise nach dem beschriebenen Verfahren und umfasst eine Anzahl vom mindestens zwei parallel geschalteten Motormodulen zur Erzeugung von Phasenströmen des Antriebs. Jedes Motormodul weist eine Sensoranordnung zur Erfassung von Phasenstromistwerten des mehrphasigen Antriebs auf und ermittelt aus den gemessenen Phasenstromistwerten einen Richtungswinkelistwert und vergleicht diesen mit einem Sollwert, um diese Werte hinsichtlich deren Übereinstimmung (Plausibilität) zu prüfen.

Die Vorrichtung umfasst des Weiteren eine allen Motormodulen gemeinsame, übergeordnete Steuereinrichtung, die den Sollwert erzeugt, diesen an die Motormodule übermittelt, von diesen die Phasenstromistwerte empfängt und die daraus modulspezifisch abgeleiteten Richtungswinkelistwerte mit dem Sollwert vergleicht sowie hinsichtlich deren Übereinstimmung überprüft (plausibilisiert).

Jedem Motormodul ist zweckmäßigerweise eine Kommunikationsschnittestelle zugeordnet, die mit einer Kommunikationsschnittstelle der Steuereinrichtung zum Zwecke einer bidirektionalen Daten- oder Signalkommunikation verbunden sind. Über diese Kommunikationsschnittstellen erfolgt der Daten- und Signalaustausch sowohl der Motormodule mit der Steuereinrichtung als auch von dieser zu jedem einzelnen Motormodul, wobei dieses geeigneterweise auch die Daten und Signale, insbesondere die Phasenstromistwerte der anderen Motormodule, zum Zwecke der Plausibilisierung empfängt.

In geeigneter Ausgestaltung umfasst das jeweilige Motormodul einen Pulsweitenmodulator mit nachgeordnetem Leistungsteil (Umrichter) zur Erzeugung der Phasenströme. Zudem umfasst das jeweilige Motormodul vorzugsweise einen Umsetzer zur modulspezifischen Transformation der Phasenstromistwerte in den Richtungswinkelistwert.

Die Steuereinrichtung umfasst in vorteilhafter Ausgestaltung eine der Anzahl der Motormodule entsprechende Anzahl von Umsetzern zur Transformation der modulspezifischen Phasenstromistwerte in die modulspezifischen Richtungswinkelistwerte.

Die mit der Erfindung erzielten Vorteile bestehen insbesondere in der Bereitstellung einer fehlersicheren Information über die Antriebsbewegung, indem bei parallel geschalteten Motormodulen die Plausibilisierung der Stromistwerte erfolgt.

Dabei ist insbesondere auch geberlos eine sichere Erfassung der Motorbewegung eines mit parallel geschalteten Motormodulen gesteuerten Antriebs (Elektromotors) ermöglicht. Da ein sicherheitsgerichteter Geber oder entsprechende Vorrichtungen entfallen, ist der Kosten-, Installations- und Wartungsaufwand vorteilhaft reduziert. Zudem wird die Zuverlässigkeit einer entsprechenden Anlage erhöht.

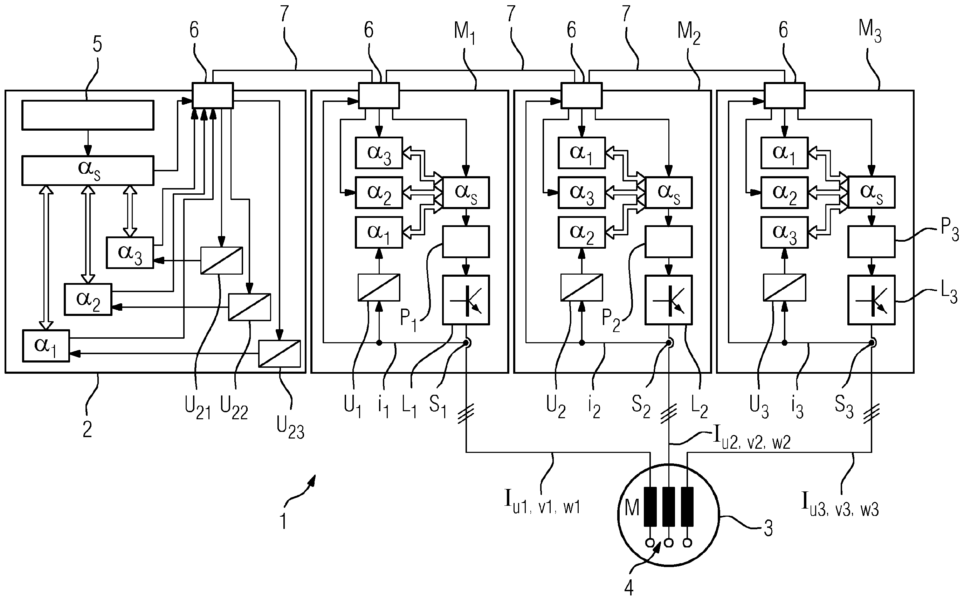

Nachfolgend wird ein Ausführungsbeispiel der Erfindung anhand einer Zeichnung erläutert. Darin zeigt die einzige Figur 1 schematisch in einem Blockschaltbild einen dreiphasigen elektrischen Antrieb (Elektromotor) sowie drei parallel geschaltete Motormodule mit integrierten Leistungsteilen und eine den Motormodulen zugeordnete und mit diesen über Kommunikationsschnittstellen verbundene Steuer- und/oder Regeleinrichtung (Control Unit).

Die in FIG 1 gezeigte Vorrichtung 1 umfasst eine übergeordnete Steuereinrichtung 2 und im Ausführungsbeispiel drei parallel geschaltete Motormodule M₁, M₂ und M₃ zur bestimmungsgemäßen Steuerung eines Antriebs 3. Der Antrieb 3 umfasst in an sich bekannter, hier nicht näher dargestellten Art und Weise einen feststehenden Teil (Stator) und einen beweglichen Teil (Rotor), der beispielsweise mit einem Werkzeug oder dergleichen Abtriebsteil gekoppelt sein kann. Der Stator weist eine mehrphasige, im Ausführungsbeispiel dreiphasige Statorwicklung auf, die auch kann aus mehreren Wicklungssystemen gebildet sein kann und nachfolgend als Phasenwicklungen 4 bezeichnet wird. Bei dem Antrieb 3 kann es sich um eine elektromotorische Synchron- oder Asynchronmaschine handeln.

Die Phasenwicklungen 4 des Antriebs 3 werden phasenselektiv (u, v, w) von jedem der drei Motormodule Mₙ mit den drei Phasenströmen I_{un, vn, wm} bestromt, wobei nachfolgend n = 1, 2, 3 ist. Infolge der Bestromung der Phasenwicklungen 4 wird statorseitig ein magnetisches Drehfeld erzeugt, in welchem der bewegliche Teil rotiert.

Die nachfolgend als Steuereinrichtung 2 bezeichnete übergeordnete Steuer- oder Regeleinrichtung zur Geschwindigkeits- und Stromregelung des Antriebs 3 arbeitet zunächst derart, dass die Parallelschaltung aus den drei Motormodulen Mₙ lediglich als ein einzelnes Motormodul M erscheint.

Ein von einem Stromregler 5 der Steuereinrichtung 2 errechneter Spannungssollwert lässt sich prinzipiell durch den Richtungswinkel α_{u,soll} und die Spannungsamplitude Uₛₒₗₗ beschreiben. Der gleiche, vom Stromregler 5 ermittelte Richtungswinkelsollwert αₛ = α_{u,soll} wird - eventuell mit Ausnahme eines konstanten Offsets bei einem Antrieb 3 mit mehreren räumlich versetzen Wicklungssystemen - an jedes der drei Motormodule Mₙ übertragen. Die Übertragung des allen Motormodulen M₁, M₂, M₃ gemeinsamen Richtungswinkelsollwerts αₛ erfolgt über der Steuereinrichtung 2 und den Motormodulen Mₙ zugeordnete Kommunikationsschnittstellen 6 und entsprechende Kommunikationsverbindungen 7.

Jedes Motormodul Mₙ erzeug anhand des Richtungswinkelsollwertes αₛ mittels eines Pulsweitenmodulators (PWM) Pₙ (mit n = 1, 2, 3) ein pulsweitenmoduliertes Steuersignal zur Ansteuerung eines dem Pulsweitenmodulator Pₙ nachgeschalteten Leistungsteils Lₙ (mit n = 1, 2, 3), insbesondere in Form eines mit Leistungstransistoren ausgeführten Umrichters, wobei wiederum n = 1, 2, 3 ist. Das jeweilige Leistungsteil Lₙ bzw. der Umrichter erzeugt die modulspezifischen Phasenströme I_{un, vn, wn} für das oder jedes Wicklungssystem des Antriebs 3, wobei wiederum n = 1, 2, 3 ist.

Jedem Motormodul Mₙ ist eine Sensoranordnung Sₙ (mit wiederum n = 1, 2, 3) zur Erfassung der Phasenstromistwerte iₙ (iᵤₙ, i_{vn,} i_{wn}) zugeordnet. Dabei ist in an sich bekannter Weise die Erfassung von lediglich zwei der drei Phasenströme Iᵤₙ, ᵥₙ, _{wn} ausreichend. Aus den gemessenen Phasenstromistwerten iₙ wird mittels eines wiederum jedem Motormodul Mₙ zugeordneten Umsetzers Uₙ (mit) der Stromraumzeiger (Stromvektor) und hierbei insbesondere der Richtungswinkelistwert αₙ = α_{in,ist} in jedem Motormodul Mₙ ermittelt, wobei n= 1, 2, 3 ist.

In jedem Motormodul Mₙ wird der Richtungswinkelistwert αₙ mit dem Sollwert αₛ = α_{u, soll} (Richtungswinkelsollwert) verglichen und plausibilisiert, das heißt auf Übereinstimmung überprüft. Hierbei ist zu beachten, dass sich der Sollwert und die Istwerte der Richtungswinkel (αₛ, αₙ) - mit Ausnahme einer parametrierbaren Toleranz - nicht überholen. Auf diese Weise wird sichergestellt, dass das jeweilige Motormodul Mₙ den Sollwert αₛ korrekt verarbeitet und in die Phasenstromistwerte iₙ (n = 1, 2, 3) umsetzt.

Die gemessenen Phasenstromistwerte iₙ werden von jedem parallel geschalteten Motormodul Mₙ an die Steuereinrichtung 2 übertragen. Diese ermittelt analog zu den Motormodulen Mₙ den Richtungswinkelistwert αₙ für jedes einzelne Motormodul Mₙ und umfasst hierzu eine entsprechende Anzahl von Umsetzern U₂ₙ = U_{21,} U_{22,} U₂₃ und plausibilisiert diese auf die gleiche Art und Weise mit dem Richtungswinkelsollwert αₛ. Diese Plausibilitätsprüfungen in der Steuereinrichtung 2 sowie in den einzelnen Motormodulen M_{1,} M_{2,} M₃ sind durch gezeichnete Doppelpfeile veranschaulicht.

Die von der Steuereinrichtung 2 errechneten Richtungswinkelistwerte αₙ werden wiederum über die Schnittstellen 6 an die parallel geschalteten Motormodule Mₙ übertragen. Jedes Motormodul Mₙ prüft somit nicht nur den jeweils modulspezifischen Richtungswinkelistwert aₙ, sondern auch diejenigen Richtungswinkelistwerte αₙ der jeweils anderen Motormodule Mₙ auf deren Übereinstimmung mit dem Sollwert αₛ.

Auf diese Weise ist eine vollständig redundante, nämlich in der Steuereinrichtung 2 und in den Motormodulen Mₙ und damit eine fehlersichere Prüfung aller Richtungswinkelistwerte αₙ mit dem Sollwert αₛ auf Übereinstimmung (Plausibilität) erreicht. Dies wiederum ermöglicht eine fehlersichere Überwachung der entsprechenden Bewegungsgröße, beispielsweise einer Lageposition oder Geschwindigkeit des bewegten Teils (Rotor), des Antriebs 3 in besonders vorteilhafter Art und Weise.

Ist nämlich das Ergebnis der redundanten Prüfung auf Übereinstimmung der Richtungswinkelistwerte αₙ mit dem Richtungswinkelsollwert αₛ plausibel, so können die genannten Richtungswinkel αₙ als fehlersicheres Maß der Bewegung des Antriebs 3 in allen prüfenden Kanälen, nämlich der Steuereinrichtung 2 und den Motormodulen Mₙ herangezogen werden. Hieraus kann beispielsweise durch Ableitung eine sichere Geschwindigkeits- und/oder sichere Lageposition ermittelt werden.

Das beschriebene Verfahren und die beschriebene Vorrichtung 1 stellen somit eine fehlersichere Information über die Motorbewegung sicher, indem die beschriebene Auswertung und Plausibilisierung der Stromistwerte iₙ bei parallel geschalteten Motormodulen Mₙ und somit parallel geschalteten Leistungsteilen Lₙ erfolgt. Eine sichere Erfassung der Motorbewegung eines derartigen, mit parallel geschalteten Motormodulen Mₙ gesteuerten Antriebs (Elektromotors) 3 ist somit ohne die Verwendung eines fehlersicheren Gebers ermöglicht. Da ein sicherheitsgerichteter Geber oder entsprechende Vorrichtungen inklusive Verkabelung entfallen, ist die beschriebene Vorrichtung 1 mit besonders geringem Aufwand realisierbar.

Zudem wird die Zuverlässigkeit einer entsprechenden Anlage erhöht, da eine besonders empfindliche Komponente in Form eines sicherheitsgerichteten Gebers oder einer entsprechenden Vorrichtung entfällt. Dies ist besonders vorteilhaft, zumal der Betrieb von derartigen Gebern in einer kritischen Betriebsumgebung, die typischerweise bei parallel geschalteten Antrieben gegeben ist, üblicherweise äußerst problematisch ist.

Des Weiteren ermöglichen das beschriebene Verfahren und die beschriebene Vorrichtung 1 eine Vereinfachung der Erstellung und Abnahme eines Sicherheitskonzepts für eine entsprechende Anlage.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

## Patentansprüche

1. Verfahren zur fehlersicheren Überwachung einer Bewegungsgröße eines elektrischen Antriebs (3) anhand erfasster Phasenstromistwerte (iₙ),
- wobei an jedes von mehreren zur gesteuerten Bestromung des Antriebs (3) parallel geschalteten Motormodulen (Mₙ) ein Sollwert (αₛ) übertragen und entsprechende Phasenströme (Iᵤₙ,ᵥₙ,_{wn}) eingestellt werden,
- wobei jedes Motormodul (Mₙ) aus den gemessenen Phasenstromistwerten (iₙ) einen Richtungswinkelistwert (αₙ) ermittelt und diesen mit dem Sollwert (αₛ) vergleicht und hinsichtlich deren Übereinstimmung überprüft,
- wobei jedes Motormodul (Mₙ) die gemessenen Phasenstromistwerte (iₙ) an eine übergeordnete Steuereinrichtung (2) überträgt, die aus den Phasenstromistwerten (iₙ) analog zu jedem Motormodul (Mₙ) den modulspezifischen Richtungswinkelistwert (αₙ) ermittelt und diesen mit dem Sollwert (αₛ) vergleicht sowie ebenfalls auf Übereinstimmung überprüft, und
- wobei die von der Steuereinrichtung (2) errechneten Richtungswinkelistwerte (αₙ) an die parallel geschalteten Motormodule (Mₙ) übertragen werden, wobei jedes Motormodul (Mₙ) nicht nur den jeweils modulspezifischen Richtungswinkelistwert (αₙ), sondern auch diejenigen Richtungswinkelistwerte (αₙ) der jeweils anderen Motormodule (Mₙ) auf deren Übereinstimmung mit dem Sollwert (αₛ) prüft,
- so dass eine vollständig redundante, nämlich in der Steuereinrichtung (2) und in den Motormodulen (Mₙ) und damit fehlersichere Prüfung aller Richtungswinkelistwerte (αₙ) mit dem Sollwert (a₃) auf Übereinstimmung (Plausibilität) erzielt wird.

2. Verfahren nach Anspruch 1, **dadurch gekennzeichnet, dass** von der Steuereinrichtung (2) an jedes Motormodul (Mₙ) ein den gleichen Richtungswinkel (α_{u,soll}) repräsentierender Sollwert (αₛ) übertragen wird.

3. Verfahren nach einem der Ansprüche 1 bis 2, **dadurch gekennzeichnet, dass** in jedem Motormodul (Mₙ) und in der Steuereinrichtung (2) aus mindestens zwei gemessenen Phasenstromistwerten (iₙ) der Richtungswinkelistwert (α_{in,ist}) ermittelt wird.

4. Verfahren nach einem der Ansprüche 1 bis 3, **dadurch gekennzeichnet, dass** jedes Motormodul (Mₙ) für jede Phase eines dreiphasigen Antriebs (3) einen Phasenstrom (Iᵤ₁,ᵥ₁,_{w1}) generiert.

5. Verfahren nach einem der Ansprüche 1 bis 4, **dadurch gekennzeichnet, dass** die Phasenstromistwerte (iₙ) an die Steuereinrichtung (2) über den Motormodulen (Mₙ) zugeordnete Kommunikationsschnittstellen (6) übertragen werden, über welche auch der Sollwert (αₛ) von der Steuereinrichtung (2) an die Motormodule (Mₙ) übertragen wird.

6. Vorrichtung (1) zur fehlersicheren Überwachung einer Bewegungsgröße eines geregelt betriebenen elektrischen Antriebs (3), insbesondere eines Elektromotors,
- mit einer Anzahl vom mindestens zwei parallel geschalteten Motormodulen (Mₙ) zur Erzeugung von Phasenströmen (Xᵤ₁,ᵥ₁,_{w1}) des Antriebs (3), wobei jedes Motormodule (Mₙ) eine Sensoranordnung (Sₙ) zur Erfassung von Phasenstromistwerten (iₙ) des mehrphasigen Antriebs (3) aufweist und aus den gemessenen Phasenstromistwerten (iₙ) einen Richtungswinkelistwert (αₙ) ermittelt sowie diesen mit einem Sollwert (αₛ) vergleicht sowie hinsichtlich deren Übereinstimmung überprüft, und
- mit einer Steuereinrichtung (2), die den Sollwert (αₛ) erzeugt und diesen an die Motormodule (Mₙ) übermittelt sowie von diesen die Phasenstromistwerte (iₙ) empfängt und die daraus modulspezifisch abgeleiteten Richtungswinkelistwerte (αₙ) mit dem Sollwert (αₛ) vergleicht sowie hinsichtlich deren Übereinstimmung überprüft.
- wobei die von der Steuereinrichtung (2) errechneten Richtungswinkelistwerte (αₙ) an die parallel geschalteten Motormodule (Mₙ) übertragbar sind, wobei jedes Motormodul (Mₙ) nicht nur den jeweils modulspezifischen Richtungswinkelistwert (αₙ), sondern auch diejenigen Richtungswinkelistwerte (αₙ) der jeweils anderen Motormodule (Mₙ) auf deren Übereinstimmung mit dem Sollwert (αₛ) prüft,
- so dass eine vollständig redundante, nämlich in der Steuereinrichtung (2) und in den Motormodulen (Mₙ) und damit fehlersichere Prüfung aller Richtungswinkelistwerte (αₙ) mit dem Sollwert (αₛ) auf Übereinstimmung (Plausibilität) erzielbar ist.

7. Vorrichtung (1) nach Anspruch 6, **dadurch gekennzeichnet, dass** das jeweilige Motormodul (Mₙ) einen Pulsweitenmodulator (Pₙ) mit nachgeordnetem Leistungsteil (Lₙ) zur Erzeugung der Phasenströme (Iᵤ₁,ᵥ₁,_{w1}) umfasst.

8. Vorrichtung (1) nach Anspruch 6 oder 7, **dadurch gekennzeichnet, dass** das jeweilige Motormodul (Mₙ) einen Umsetzer (Uₙ) zur modulspezifischen Transformation der Phasenstromistwerte (iₙ) in den Richtungswinkelistwert (αₙ) und die Steuereinrichtung (2) eine der Anzahl der Motormodule (Mₙ) entsprechende Anzahl von Umsetzern (U₂ₙ) zur Transformation der modulspezifischen Phasenstromistwerte (iₙ) in die modulspezifischen Richtungswinkelistwerte (αₙ) umfasst.

9. Vorrichtung (1) nach einem der Ansprüche 6 bis 8,
**dadurch gekennzeichnet, dass** die Steuereinrichtung (2) und jedes Motormodul (Mₙ) eine Kommunikationsschnittstelle (6) aufweist, die zur bidirektionalen Signalübertragung miteinander verbunden sind.

## Claims

1. Method for the fail-safe monitoring of a motion quantity of an electric drive (3) on the basis of recorded phase current actual values (iₙ),
- wherein a desired value (αₛ) is transmitted to each of a number of motor modules (Mₙ) connected in parallel to the controlled current feed of the drive (3) and corresponding phase currents (I_{un,vn,wn}) are set,
- wherein each motor module (Mₙ) determines an azimuth actual value (αₙ) from the measured phase current actual values (iₙ), and compares this with the desired value (αₛ) and checks the correspondence thereof,
- wherein each motor module (Mₙ) transmits the measured phase current actual values (iₙ) to a higher-level control device (2), which determines the module-specific azimuth actual value (αₙ) from the phase current actual values (iₙ) in a similar manner to each motor module (Mₙ) and compares this with the desired value (αₛ) and likewise checks the correspondence thereof, and
- wherein the azimuth actual values (αₙ) calculated by the control device (2) are transmitted to the parallel-connected motor modules (Mₙ), wherein each motor module (Mₙ) checks not only the respective module-specific azimuth actual value (αₙ) but also those azimuth actual values (αₙ) of the respective other module modules (Mₙ) for correspondence with the desired value (αₛ),
- so that a completely redundant, namely in the control device (2) and in the motor modules (Mₙ), and thus fail-safe check of all azimuth actual values (αₙ) with the desired value (αₛ) for correspondence (plausibility) is achieved.

2. Method according to claim 1, **characterised in that** a desired value (αₛ) representing the same azimuth (αᵤ,_{desired}) is transmitted by the control device (2) to each motor module (Mₙ).

3. Method according to one of claims 1 to 2, **characterised in that** the azimuth actual value (αᵢₙ,_{actual}) is determined in each motor module (Mₙ) and in the control device (2) from at least two measured phase current actual values (iₙ).

4. Method according to one of claims 1 to 3, **characterised in that** each motor module (Mₙ) generates a phase current (Iᵤ₁,ᵥ₁,_{w1}) for each phase of a three-phase drive (3) .

5. Method according to one of claims 1 to 4, **characterised in that** the phase current actual values (iₙ) are transmitted to the control device (2) via communication interfaces (6) assigned to the motor modules (Mₙ), by way of which communication interfaces (6) the desired value (αₛ) is also transmitted by the control device (2) to the motor modules (Mₙ).

6. Device (1) for the fail-safe monitoring of a motion quantity of an electrical drive (3) operated in a regulated manner, in particular of an electric motor,
- with a number of at least two parallel-connected motor modules (Mₙ) for generating phase currents (Iᵤ₁,_{v1,w1}) of the drive (3), wherein each motor module (Mₙ) has a sensor arrangement (Sₙ) for recording phase current actual values (iₙ) of the multi-phase drive (3) and determines an azimuth actual value (αₙ) from the measured phase current actual values (iₙ) and compares this with a desired value (αₛ) and checks the correspondence thereof, and
- with a control device (2) which produces the desired value (αₛ) and transmits this to the motor modules (Mₙ) and receives from these the phase current actual values (iₙ) and compares the azimuth actual values (αₙ) derived in a module-specific manner therefrom with the desired value (αₛ) and checks the correspondence thereof.
- wherein the azimuth actual values (αₙ) calculated by the control device (2) can be transmitted to the parallel-connected motor modules (Mₙ), wherein each motor module (Mₙ) checks not only the respective module-specific azimuth actual value (αₙ) but also those azimuth actual values (αₙ) of the respective other motor modules (Mₙ) for their correspondence with the desired value (αₛ),
- so that a completely redundant, namely in the control device (2) and in the module modules (Mₙ), and thus fail-safe check of all azimuth actual values (αₙ) with the desired value (αₛ) for correspondence (plausibility) can be achieved.

7. Device (1) according to claim 6, **characterised in that** the respective motor module (Mₙ) comprises a pulse width modulator (Pₙ) with a lower-level power element (Lₙ) for producing the phase currents (Iᵤ₁,_{v1,w1}).

8. Device (1) according to claim 6 or 7, **characterised in that** the respective motor module (Mₙ) comprises a transducer (Uₙ) for the module-specific transformation of the phase current actual values (iₙ) into the azimuth actual value (αₙ) and the control device (2) comprises a number of transducers (U₂ₙ), which corresponds to the number of motor modules (Mₙ), for transforming the module-specific phase current actual values (iₙ) into the module-specific azimuth actual values (αₙ).

9. Device (1) according to one of claims 6 to 8, **characterised in that** the control device (2) and each motor module (Mₙ) has a communication interface (6), which are connected to one another for bidirectional signal transmission.

## Revendications

1. Procédé de contrôle protégé des erreurs d'une grandeur de mouvement d'un entraînement (3) électrique à l'aide de valeurs (iₙ) réelles détectées de courant de phase,
- dans lequel on transmet une valeur (αₛ) de consigne à chacun de plusieurs modules (Mₙ) de moteur, montés en parallèle pour la commande de l'alimentation en courant de l'entraînement (3) et on règle des courant (Iᵤₙ, vₙ, wₙ) de phase correspondants,
- dans lequel chaque module (Mₙ) de moteur détermine, à partir des valeurs (iₙ) réelles mesurées de courant de phase, une valeur (αₙ) réelle d'angle de direction et la compare à la valeur (αₛ) de consigne et contrôle leur coïncidence,
- dans lequel chaque module (Mₙ) de moteur transmet les valeurs (iₙ) réelles mesurées de courant de phase à un dispositif (2) de commande supérieur hiérarchiquement, qui détermine, à partir des valeurs (iₙ) réelles de courant de phase, d'une manière analogue pour chaque module (Mₙ) de moteur, la valeur (αₙ) réelle d'angle de direction spécifique au module et la compare à la valeur (αₛ) de consigne, ainsi que contrôle également leur coïncidence, et
- dans lequel on transmet les valeurs (αₙ) réelles d'angle de direction calculées par le dispositif (2) de commande aux modules (Mₙ) de moteur montés en parallèle, chaque module (Mₙ) de moteur contrôlant, non seulement sa valeur (αₙ) réelle d'angle de direction spécifique au module, mais également les valeurs (αₙ) réelles d'angle de direction des autres modules (Mₙ) de moteur, sur leur coïncidence avec la valeur (αₛ) de consigne,
- de manière à obtenir un contrôle entièrement redondant, à savoir dans le dispositif (2) de commande et dans les modules (Mₙ) de moteur, et ainsi un contrôle protégé des erreurs de toutes les valeurs (αₙ) réelles d'angle de direction sur leur coïncidence (vraisemblance) avec la valeur (αₛ) de consigne.

2. Procédé suivant la revendication 1, **caractérisé en ce que** l'on transmet, par le dispositif (2) de commande, à chaque module (Mₙ) de moteur une valeur (αₛ) de consigne représentant le même angle (α_{s,soll}) de direction.

3. Procédé suivant la revendication 1 à 2, **caractérisé en ce que** l'on détermine, dans chaque module (Mₙ) de moteur et dans le dispositif (2) de commande, la valeur (α_{in, ist}) réelle d'angle de direction à partir d'au moins deux valeurs (iₙ) réelles mesurées de courant de phase.

4. Procédé suivant l'une des revendications 1 à 3, **caractérisé en ce que** chaque module (Mₙ) de moteur crée un courant (Iᵤ₁,ᵥ₁,_{w}) de phase pour chaque phase d'un entraînement (3) triphasé.

5. Procédé suivant l'une des revendications 1 à 4, **caractérisé en ce que** l'on transmet les valeurs (iₙ) réelles de courant de phase au dispositif (2) de commande par des interfaces (6) de communication, qui sont associées aux modules (Mₙ) de moteur et par lesquelles on transmet également la valeur (αₛ) de consigne du dispositif (2) de commande aux modules (Mₙ) de moteur.

6. Système (1) de contrôle protégé des erreurs d'une grandeur de mouvement d'un entraînement (3) électrique entraîné de manière réglée, notamment d'un moteur électrique,
- comprenant un certain nombre d'au moins deux modules (Mₙ) de moteur montés en parallèle pour produire des courants (Iᵤ₁, ᵥ₁, _{w}) de phase de l'entraînement (3), chaque module (Mₙ) de moteur ayant un agencement (Sₙ) de capteur pour la détection de valeurs (iₙ) réelles de courant de phase de l'entraînement (3) polyphasé et déterminant, à partir des valeurs (iₙ) réelles mesurées de courant de phase, une valeur (αₙ) réelle d'angle de direction, ainsi que la comparant à une valeur (αₛ) de consigne et la contrôlant en ce qui concerne leur coïncidence, et
- comprenant un dispositif (2) de commande, qui produit la valeur (αₛ) de consigne et la transmet aux modules (Mₙ) de moteur, ainsi que reçoit de ceux-ci les valeurs (iₙ) réelles de courant de phase et compare, à la valeur (αₛ) de consigne, les valeurs (αₙ) réelles d'angle de direction, qui s'en déduisent, spécifiques aux modules, ainsi que les contrôle en ce qui concerne leur coïncidence,
- dans lequel les valeurs (αₙ) réelles calculées d'angle de direction peuvent être transmises aux modules (Mₙ) de moteur montés en parallèle, chaque module (Mₙ) de moteur contrôlant, non seulement sa propre valeur (αₙ) réelle d'angle de direction spécifique au module, mais également les valeurs (αₙ) réelles d'angle de direction des autres modules (Mₙ) de moteur sur leur coïncidence avec la valeur (αₛ) de consigne,
- de manière à pouvoir obtenir un contrôle entièrement redondant, à savoir dans le dispositif (2) de commande et dans les modules (Mₙ) de moteur, et ainsi un contrôle protégé vis-à-vis des erreurs de toutes les valeurs (αₙ) réelles d'angle de direction, sur leur coïncidence (vraisemblance ) avec la valeur (αₛ) de consigne.

7. Système (1) suivant la revendication 6, **caractérisé en ce que** le module (Mₙ) de moteur respectif comprend un modulateur (Pₙ) en largeur d'impulsion, ayant une partie (Lₙ) de puissance en aval pour la production des courants (Iᵤ₁, ᵥ₁, _{w1}) de phase.

8. Système (1) suivant la revendication 6 ou 7, **caractérisé en ce que** chaque module (Mₙ) de moteur comprend un convertisseur (Uₙ) pour la transformation, spécifique aux modules, des valeurs (iₙ) réelles de courant de phase en la valeur (αₙ) réelle d'angle de direction et le dispositif (2) de commande comprend un nombre, correspondant au nombre de modules (Mₙ) de mesure, de convertisseurs (U₂ₙ), pour la transformation des valeurs (iₙ) réelles de phase de courant, spécifiques aux modules, en les valeurs (αₙ) réelles d'angle de direction spécifiques aux modules.

9. Système (1) suivant l'une des revendications 6 à 8, **caractérisé en ce que** le dispositif (2) de commande et chaque module (Mₙ) de moteur ont une interface (6) de communication, qui sont reliées entre elles pour la transmission bidirectionnelle de signaux.
